# FASCICULE DE BREVET EUROPEEN

(11) **EP 1 504 228 B1**
(45) Date de publication et mention de la délivrance du brevet: **28.03.2007**
(21) Numéro de dépôt: 03725199.8
(22) Date de dépôt: 14.04.2003
(51) Int. Cl.: F25D 1/00

(54) **HOUSSE DE PROTECTION POUR DES APPAREILS DE SOUDAGE**
SCHUTZBEZUG FÜR SCHWEISSVORRICHTUNGEN
PROTECTIVE COVERING FOR WELDING DEVICES

(30) Priorité: 15.04.2002 FR 0204763
(43) Date de publication de la demande: 09.02.2005
(73) Titulaire: Atelier Systemes de Protection SAS, 53690 Eulmont (FR)
(72) Inventeur: ROBILLOT, Alain, F-54690 Eulmont (FR)
(74) Mandataire: Vièl, Frédérique
(86) Numéro de dépôt international: PCT/EP2003/050105
(87) Numéro de publication internationale: WO 2003/087685

(56) Documents cités:
- DE-U- 8 627 744
- DE-U- 8 701 169
- US-A- 2 337 767
- US-A- 5 091 619

## Description

L'invention concerne une housse de protection pour des appareil de soudage selon le préambule de la revendication 1. Une telle housse est décrite dans le document US 2,337,767 A.

Les appareils de soudage, notamment les pinces de soudage par points, présentent une multitude de tuyaux, câbles électriques et autres éléments qu'il faut protéger en l'absence d'un boîtier ou capot. Dans ce but, on utilise couramment des housses de protection.

Ces housses étaient d'abord en matériau souple et extensible ce qui permettait de les utiliser pour des appareils de soudage de différentes dimensions. Cependant, ceci est très coûteux et nécessite du temps pour la prise de mesure, la conception et les essais avant que la housse puisse être posée et l'appareil de soudage ainsi habillé puisse être utilisé.

On connaît du document US 2,337,767 A une housse destinée à être placée sur une pince manuelle destinée à tenir un objet devant être soudé afin de protéger la main de l'utilisateur. Cette housse sert à protéger la main de l'utilisateur.

Le document DE 87 01 169 U, présente une enceinte dans laquelle se trouve un bras de soudure et l'objet à souder. Une hotte assure une dépression à l'intérieur de l'enceinte afin que les vapeurs et les particules émises lors de la soudure soient aspirées vers un filtre. Cette enceinte sert donc à protéger le personnel des émanations potentiellement toxiques dues à la soudure mais ne protège pas le bras de soudure lui-même.

De même, les documents DE 86 27 744 U et US 5,091,619 A présentent des boîtiers de protection servant à isoler l'outil de soudure et l'objet à souder de l'environnement extérieur, principalement pour capter les émanations dues à la soudure afin de les traiter. Ici aussi, aucune mesure n'est prise pour protéger le dispositif de soudure lui-même.

En raison des exigences accrues au niveau de la résistance du matériau composant les housses, notamment la résistance aux projections de soudure et au feu, il a été nécessaire de faire appel à des matériaux souples mais non extensibles, ce qui nécessite que les housses soient fabriquées sur mesure pour correspondre au mieux aux dimensions de l'appareil de soudage.

L'invention a pour but de créer des housses de protection pour des appareils de soudage qui résistent aux projections de soudure, qui soient ininflammables et qui puissent s'adapter sur un grand nombre d'appareils de soudage de dimensions différentes.

Ce but est atteint conformément à l'invention par une housse selon la revendication 1.

Cette housse se pose en deux étapes sur l'appareil de soudage : les panneaux avant et arrière sont tout d'abord installés sur la partie de l'appareil de soudage pourvue de bras et la partie opposée à celle-ci et ils sont reliés par les moyens de liaison. Il est ainsi possible de protéger un grand nombre d'appareils de soudage différents avec relativement peu d'éléments de tailles différentes.

Une fois l'avant et l'arrière de l'appareil protégé, il ne reste plus que la partie entre les deux panneaux à protéger. Cette protection s'effectue au moyen d'un pourtour tubulaire dont les dimensions peuvent être adaptées à la circonférence de l'appareil par l'ajout (ou la suppression) d'un des panneaux enchaînés constituant ce pourtour. L'avantage de l'invention réside dans le fait qu'une housse en matériau résistant aux projections de soudure et ininflammable peut être rapidement adaptée aux dimensions de l'appareil de soudage. Ceci évite les inconvénients de la fabrication sur mesure des housses, notamment le prix relativement élevé et le temps de fabrication assez long. De plus, il est dorénavant possible d'adapter rapidement une housse ayant servi sur un premier appareil pour l'utiliser sur un second appareil.

Dans une variante de l'invention, le panneau avant présente des ouvertures pour laisser sortir les bras d'une pince de soudage par points. Les distances entre les bras des pinces de soudage par points étant standardisées, il suffira de prévoir relativement peu de variantes pour pouvoir protéger tous les types d'appareils. Il est par ailleurs possible de ne réaliser les ouvertures dans le panneau qu'au moment de l'habillage d'un appareil et d'adapter à ce moment-là les ouvertures aux distances entre les bras.

Il est possible que le panneau arrière soit pourvu d'une ouverture pour laisser passer le bras d'un manipulateur ou un faisceau de câbles. Ceci permet la manipulation de l'appareil de soudage par un robot en le saisissant par derrière ou cela laisse simplement un passage pour des câbles ou de tuyaux d'alimentation.

Dans un mode privilégié de réalisation de l'invention, le panneau avant et/ou le panneau arrière présente(nt) une partie latérale pouvant être au moins partiellement recouverte par le pourtour ou recouvrir celui-ci. Cette mesure permet un recouvrement des deux parties de la housse à l'endroit où celles-ci se chevauchent ce qui améliore la protection de l'appareil.

Une autre variante de l'invention prévoit que les moyens de liaison entre les panneaux avant et arrière sont des sangles pourvues d'éléments de fixation et de réglage. Ces moyens permettent une fixation rapide et durable des deux panneaux avant et arrière sur l'appareil.

Dans le cadre de l'invention, il est avantageux que les moyens de liaison entre les panneaux avant et arrière soient des sangles élastiques. Ceci peut faciliter la mise en place des panneaux.

Dans une variante privilégiée de l'invention, les panneaux du pourtour sont reliés par des bandes de type Velcro® situées sur leur bords latéraux. Cette façon de fixer les panneaux permet de rajouter ou d'enlever rapidement un des panneaux et d'assurer en même temps une bonne solidité du pourtour.

Il est également possible que les panneaux du pourtour soient reliés entre eux au moins aux extrémités de leurs bords latéraux par des boutons pression ou des tourniquets. Il est d'une part possible de ne maintenir les panneaux qu'au moyen de tourniquets ou de boutons de pression ou, d'autre part, de combiner des tourniquets ou des boutons de pression situés aux extrémités des bords latéraux des panneaux avec des bandes de type Velcro® placés entre ces tourniquets. Dans cette dernière version, les tourniquets évitent une amorce d'ouverture des bandes de type type Velcro®.

L'invention est décrite ci-après à l'aide des dessins suivants présentant un exemple de réalisation de l'invention :

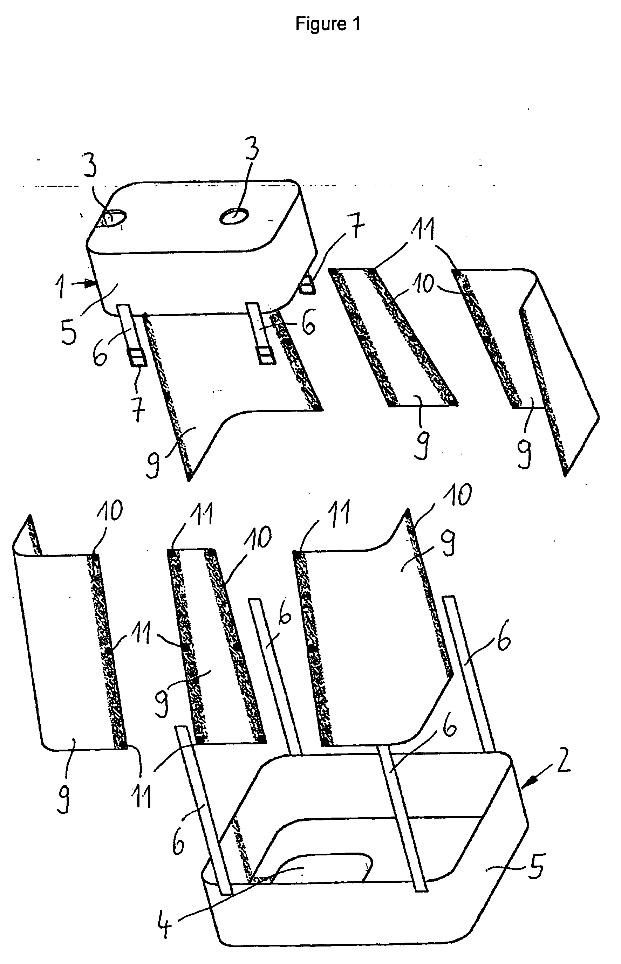

- Figure 1: vue éclatée d'une housse conforme à l'invention,

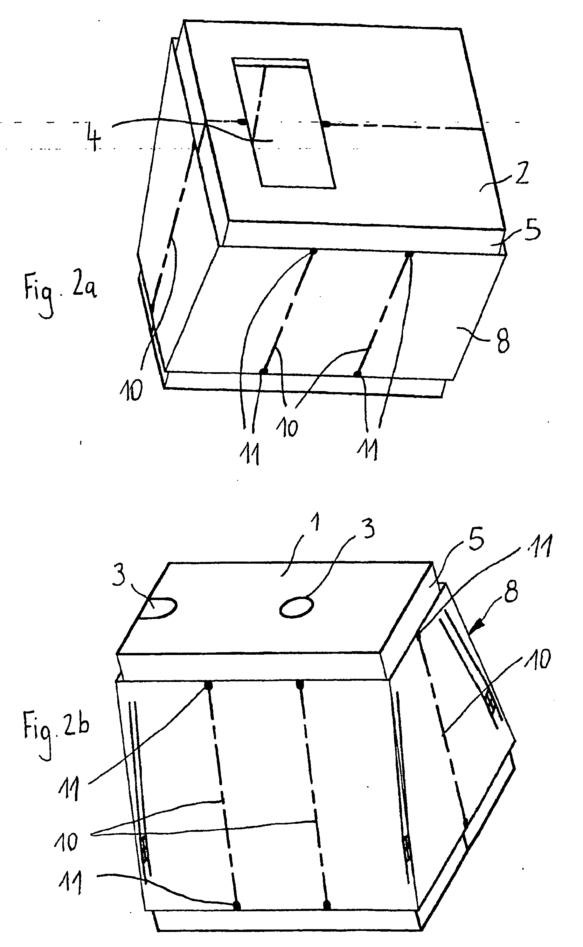

- Figure 2a, 2b: housse à l'état monté.

La housse selon l'invention se compose d'un panneau avant (1) et d'un panneau arrière (2) sensiblement plats qui se mettent devant la partie avant (avec les bras) et arrière d'une pince de soudage par points. Le panneau avant (1) présente des ouvertures (3) pour faire passer les bras, le panneau arrière (2) possède une ouverture (4) pour faire passer un bras de robot à l'aide duquel l'appareil sera manipulé. Les ouvertures (3) et (4) peuvent être pourvues de bandes élastiques afin d'obtenir une meilleure étanchéité aux projections. Les panneaux avant (1) et arrière (2) sont munis chacun d'un bord latéral (5), les bords latéraux (5) du panneau avant (1) et arrière (2) étant dirigés l'un vers l'autre. Dans l'exemple montré, quatre paires de sangles (6) permettent de relier ensemble le panneau avant (1) et le panneau arrière (2). Des éléments de fixation et de réglage (7) sont prévus sur chacune de ces paires de sangles (6).

Entre les panneaux avant (1) et arrière (2) prend place un pourtour tubulaire (8) qui est composé de panneaux (9) reliés latéralement entre eux de manière à ce que le pourtour ait sensiblement la circonférence de l'appareil à habiller. Dans ce but, il est possible d'ajouter des panneaux (9) ou d'en supprimer, les panneaux (9) n'étant fixés les uns aux autres qu'au moyen de bandes type Velcro® (10) et de tourniquets (11), ces derniers étant notamment placés aux extrémités pour éviter une amorce d'ouverture de la bande type Velcro® (10).

De cette manière, il est possible d'habiller en peu de temps un appareil de soudage avec une housse préfabriquée qui peut être taillée dans un matériau ininflammable et résistant aux projections de soudure tout en étant en général souple mais non extensible.

### Liste des références

- 1: panneau avant
- 2: panneau arrière
- 3: ouvertures pour les bras
- 4: ouverture pour le bras de robot
- 5: bord latéral
- 6: paire de sangle
- 7: moyens de fixation des paires de sangles
- 8: pourtour tubulaire
- 9: panneaux latéraux
- 10: bandes de type Velcro®
- 11: tourniquets

## Revendications

1. Housse de protection pour des appareils de soudage, notamment les pinces de soudage par points, cette housse résistant aux projections de soudure et étant ininflammable, la housse étant constituée d'un panneau avant (1), **caractérisée en ce que** la housse comprend en outre un panneau arrière (2), le panneau avant (1) et le panneau arrière (2) étant munis de moyens de liaison et de réglage (6, 7) pour les relier entre eux et régler la distance entre les deux panneaux (1, 2), ces panneaux (1, 2) étant sensiblement plans et protégeant la partie de l'appareil pourvue de pinces de soudage et la partie opposée à cette dernière, ainsi qu'un pourtour (8) tubulaire distinct à disposer entre les panneaux avant (1) et arrière (2) et protégeant la partie située entre ceux-ci, ce pourtour (8) étant constitué de plusieurs panneaux (9) reliés ensemble de manière dissociable les uns des autres afin que le pourtour (8) corresponde au mieux à la circonférence de l'appareil de soudage.

2. Housse de protection selon la revendication 1, **caractérisée en ce que** le panneau avant (1) présente des ouvertures (3) pour laisser sortir les bras d'une pince de soudage par points.

3. Housse de protection selon l'une des revendications précédentes, **caractérisée en ce que** le panneau arrière (2) est pourvu d'une ouverture (4) pouvant laisser passer le bras d'un manipulateur ou un faisceau de câbles.

4. Housse de protection selon l'une des revendications précédentes, **caractérisée en ce que** le panneau avant (1) et/ou le panneau arrière (2) présentent une partie latérale (5) pouvant être au moins partiellement recouverte par le pourtour (8) ou recouvrir celui-ci.

5. Housse de protection selon l'une des revendications précédentes, **caractérisée en ce que** les moyens de liaison (6) entre les panneaux avant (1) et arrière (2) sont des sangles (6) pourvues d'éléments de fixation et de réglage (7).

6. Housse de protection selon l'une des revendications précédentes, **caractérisée en ce que** les moyens de liaison (6) entre les panneaux avant (1) et arrière (2) sont des sangles élastiques (6).

7. Housse de protection selon l'une des revendications précédentes, **caractérisée en ce que** les panneaux (9) du pourtour sont reliés entre eux par des bandes de type Velcro® (10) situées sur leur bords latéraux.

8. Housse de protection selon l'une des revendications précédentes, **caractérisée en ce que** les panneaux (9) du pourtour (8) sont reliés entre eux au moins aux extrémités de leurs bords latéraux par des boutons pression ou des tourniquets (11).

## Claims

1. Protective cover for welding apparatus, in particular spot welding pliers, this cover resisting welding splashes and being non-flammable, the cover comprising a front panel (1), **characterised in that** the cover further comprises a rear panel (2), the front panel (1) and the rear panel (2) being provided with connection and adjustion means (6, 7) for connecting them together and for adjusting the distance between the two panels (1, 2), these panels (1, 2) being substantially planar and protecting the part of the apparatus provided with welding pliers and the part opposite to this, as well as a distinct tubular periphery (8) to be disposed between the front (1) and rear (2) panels and protecting the part situated between these, this periphery (8) consisting of several panels (9) connected together so as to be able to be disconnected the one from the other so that the periphery (8) best corresponds to the circumference of the welding apparatus.

2. Protective cover according to claim 1, **characterised in that** the front panel (1) has openings (3) for allowing the arms of spot welding pliers to pass.

3. Protective cover according to one of the preceding claims, **characterised in that** the rear panel (2) is provided with an opening (4) for allowing the arm of a manipulator or a cable cluster to pass.

4. Protective cover according to one of the preceding claims, **characterised in that** the front panel (1) and/or the rear panel (2) has a lateral part (5) that can be at least partially covered by the periphery (8) or can cover it.

5. Protective cover according to one of the preceding claims, **characterised in that** the means of connection (6) between the front (1) and rear (2) panels are straps (6) provided with fixing and adjustment elements (7).

6. Protective cover according to one of the preceding claims, **characterised in that** the connection means (6) between the front (1) and rear (2) panels are elastic straps (6).

7. Protective cover according to one of the preceding claims, **characterised in that** the panels (9) of the periphery are connected together by bands (10) of the Velcro® type situated on their lateral edges.

8. Protective cover according to one of the preceding claims, **characterised in that** the panels (9) of the periphery (8) are connected together at least at the ends of the lateral edges by snap fastener or turn button (11).

## Patentansprüche

1. Schutzhülle für Schweißgeräte, insbesondere Punktschweißzangen, wobei die Hülle gegen Schweißspritzer widerstandsfähig ist und feuerfest ist, und die Hülle aus einer vorderen Bahn (1) gebildet ist, **dadurch gekennzeichnet, dass** die Hülle weiter eine hintere Bahn (2) aufweist, wobei die vordere Bahn (1) und die hintere Bahn (2) mit Mitteln zur Verbindung und Einstellung (6, 7) ausgestattet sind, um miteinander verbunden zu werden und den Abstand zwischen den beiden Bahnen (1, 2) einstellen zu können, wobei die Bahnen (1, 2) im Wesentlichen eben sind und den Teil des Geräts, der mit den Schweißzangen ausgestattet ist, und den diesem gegenüberliegenden Teil schützen, sowie eine gesonderte röhrenförmige Umrandung (8), die zwischen der vorderen (1) und hinteren (2) Bahn angeordnet wird und den zwischen diesen angeordneten Teil schützt, wobei die Umrandung (8) aus mehreren Bahnen (9) gebildet ist, die miteinander auf entfernbare Weise verbunden sind, damit die Umrandung (8) bestmöglich den Abmessungen des Schweißgeräts entspricht.

2. Schutzhülle gemäß Anspruch 1, **dadurch gekennzeichnet, dass** die vordere Bahn (1) Öffnungen (3) für die Arme einer Punktschweißzange aufweist.

3. Schutzhülle gemäß einem der vorausgegangenen Ansprüche, **dadurch gekennzeichnet, dass** die hintere Bahn (2) mit einer Öffnung (4) für den Arm eines Manipulators oder einen Kabelstrang ausgestattet ist.

4. Schutzhülle gemäß einem der vorausgegangenen Ansprüche, **dadurch gekennzeichnet, dass** die vordere Bahn (1) und/oder die hintere Bahn (2) ein Seitenteil (5) aufweist, das wenigstens teilweise von der Umrandung (8) bedeckt ist oder diese bedeckt.

5. Schutzhülle gemäß einem der vorausgegangenen Ansprüche, **dadurch gekennzeichnet, dass** die Verbindungsmittel (6) zwischen der vorderen (1) und hinteren (2) Bahn, Gurte (6) sind die mit Elementen zur Befestigung und Einstellung (7) ausgestattet sind.

6. Schutzhülle gemäß einem der vorausgegangenen Ansprüche, **dadurch gekennzeichnet, dass** die Verbindungsmittel (6) zwischen der vorderen (1) und hinteren (2) Bahn elastische Gurte (6) sind.

7. Schutzhülle gemäß einem der vorausgegangenen Ansprüche, **dadurch gekennzeichnet, dass** die Bahnen (9) der Umrandung miteinander durch Bänder der Art Velcro® (10) verbunden sind, die an deren Seitenrändern angeordnet sind.

8. Schutzhülle gemäß einem der vorausgegangenen Ansprüche, **dadurch gekennzeichnet, dass** die Bahnen (9) der Umrandung wenigstens an ihren Seitenrändern miteinander durch Druckknöpfe oder Drehkreuze (11) verbunden sind.
